Europäisches Patentamt

European Patent Office

Office européen des brevets

(19)

(11) **EP 1 031 935 A2**

(12) **EUROPEAN PATENT APPLICATION**

(43) Date of publication:
**30.08.2000   Bulletin 2000/35**

(51) Int Cl.[7]: **G06F 17/60**

(21) Application number: **00301516.1**

(22) Date of filing: **25.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.02.1999   JP 4885799**

(71) Applicant: **KABUSHIKI KAISHA TOSHIBA**
**Kawasaki-shi, Kanagawa-ken 210-8572 (JP)**

(72) Inventor: **Tanaka, Katsumi,**
**c/o Intellectual Property Div.**
**Minato-ku, Tokyo (JP)**

(74) Representative: **Granleese, Rhian Jane**
**Marks & Clerk,**
**57-60 Lincoln's Inn Fields**
**London WC2A 3LS (GB)**

(54) **Electronic commerce apparatus and electronic commerce method for improving a sales efficiency, and recording medium for storing electronic commerce programs**

(57)    There is disclosed electronic commerce apparatus and method, which can improve a sales efficiency by carrying out product sales corresponding to the product purchase characteristic of the buyer in the electronic commerce using a computer network, and a recording medium for storing electronic commerce programs. This electronic commerce apparatus comprises a buyer type estimation unit (15b) for deriving a buyer type indicating a tendency of a buyer in buying the product based on history of transaction data between the buyer who buys the product and a seller, a transaction data storage unit (18) for storing the transaction data, and a product offering data generation unit (15,16) for controlling variably product offering data to be offered to the buyer every buyer according to the buyer type, whereby the product purchase characteristic of the buyer is estimated according to the history of the transaction data, and a product price is decided every buyer according to this characteristic value.

FIG.1

EP 1 031 935 A2

**Description**

BACKGROUND OF THE INVENTION

1. Field of the Invention

The present invention relates to an electronic commerce apparatus and an electronic commerce method, and a recording medium for storing electronic commerce programs. More particularly, the present invention relates to a technology that can improve a sales efficiency between the buyer and the seller in the electronic commerce using a computer network such as the Internet, etc. by achieving the optimum sales of products in response to the product purchase characteristic of respective buyers.

2. Description of the Related Art

In recent years, with the development of the computer network technology, the electronic commerce system in which the electronic commerce is carried out with connecting the buyers and the seller via the network which is typified by the Internet has been implemented.

In this electronic commerce, the seller can perform information exchange including the offering of products to the buyers by opening up a virtual shop on the network by utilizing the WWW browser. The order which is transmitted from the buyer by using the E-mail or the WWW browser can be transmitted and accepted by the server computer of the seller.

Unlike the face-to-face selling, this electronic commerce enables the seller to carry out business activities to a number of potential product purchasers by offering the products to many and unspecified buyers including buyers at the remote location. Therefore, this electronic commerce provides the high convenience to both the seller of the product and the buyers.

In the electronic settlement as the technology related to this electronic commerce, technological developments such as developments of the personal information concealment scheme which is important for the buyer, the electronic money which can improve the convenience of transaction, etc. are made actively based on the encryption technology.

However, the conventional electronic commerce system has following problems.

That is, the electronic commerce is carried on remotely via the communication network. For this reason, it is difficult for the seller to grasp and specify individual buyer's information compared with the commercial activities in the real shop. Here the buyer's information is information which are important for the marketing, such as sales of the product dependent upon the age, the sex, etc. of the buyer, and the like.

In the commercial activities in the real shop, the fine measures such as the price change through the negotiation with various buyers, etc. can be taken. On the contrary, in the electronic commerce, the price of product, the product offering method, etc. have been set uniformly for all buyers, otherwise equal information have been offered every buyer's profile categorized by the male or female, the age bracket, etc.

It is possible to carry out manually the negotiation with respective buyers such as the above price change, etc. by providing an interface in the seller side server. However, in this case that the measures are carried out manually every time on the seller side, a running cost on the seller side is increased and thus the labor saving and the convenience which are advantages of the virtual shop are lost.

SUMMARY OF THE INVENTION

The present invention has been made to overcome such a problem that the sales efficiency is poor since the flexible offer of products such as the price change, etc. cannot be conducted buyer by buyer in the electric commerce.

It is an object of the present invention to provide an electronic commerce apparatus and an electronic commerce method, which enable to improve a sales efficiency by achieving the optimum offer of products in response to the product purchase characteristic of each buyer, and a recording medium for storing electronic commerce programs.

Also, it is another object of the present invention to improve the sales efficiency by carrying out the offer of products in response to the buyer's interest in respective products.

A feature of the present invention resides in that the product purchase characteristic of each buyer is estimated based on the transaction history information between the buyer and the seller, and then the offer of products is decided every buyer in compliance with this estimated product purchase characteristic.

The estimated value of this product purchase characteristic can be derived by predicting product purchase patterns regarding desired products of a buyer from product offering data acquired at the time of other product purchase.

According to an aspect of the present invention, there is provided an apparatus for performing electronic commerce of a product by a computer via a network, comprising a buyer type estimation unit for deriving a buyer type indicating a product purchase characteristic of the buyer according to transaction actual result data between the buyer for buying a product and a seller; a product offering data generation unit for generating at least one piece of product offering data to be offered to the buyer in response to a product request for each buyer according to the derived buyer type, the product offering data being displayed to the buyer so as to correspond to the product purchase characteristic of the buyer; and a transmission unit for transmitting the generated product offering data.

Preferably, the product offering data generation unit calculates at least any one or more of a price, a lead time, and a purchase number of a requested product according to the buyer type and sets it in the product offering data.

According to the above configuration, the product offering data employed to perform the sales negotiation of the product can be changed variably every buyer. Therefore, optimum product offering data can be offered to each buyer.

Preferably, the transaction actual result data is generated every combination of a buyer identifier for identifying uniquely each buyer and a product identifier for identifying uniquely each product to include any one or more of offering price data offered from the buyer, selling price data to be offered to the buyer, lead time of the product, and attention degree data indicating a degree of buyer's interest to the product.

Preferably, the buyer type estimation unit derives the buyer type according to the transaction actual result data corresponding to other product identifier for which the buyer has transaction actual result other than a given product identifier.

According to the above configuration, the buyer type can be easily estimated based on the purchase pattern for other products of the buyer.

Preferably, the product offering data generation unit sets product layout data, which indicates a layout or a size of a product offered to the buyer on a display device, in the product offering data according to the attention degree data in the transaction actual result data.

According to the above configuration, the product to which a buyer has deep interest can be emphasized in offering in response to the past purchase actual results and the degree of attention to the product.

The buyer type estimation unit derives the buyer type according to the transaction actual result data corresponding to other buyer who has personal information similar to the buyer.

Otherwise, the buyer type estimation unit derives the buyer type according to a count of the buyer type concerning all buyers in the transaction actual result data if the buyer has no transaction actual result with the seller.

According to the above configuration, candidates of the optimum sales offering data can be offered to new buyers who have no transaction history in the past.

According to another aspect of the present invention, there is provided an apparatus for transmitting product transaction in response to product offer from a seller by a computer via a network, comprising a transmission unit for transmitting a product offering request to a server; a product layout decision unit for generating product layout data, which indicates a layout or a size of a product offered to a buyer on a display device, according to attention degree data, which indicates a degree of interest of the buyer issuing the product offering request with respect to the product, in product offering data received from the server; and a product offering unit for offering the product in compliance with the generated product layout data.

According to the above configuration, the product offering data employed to perform the sales negotiation of the product can be changed variably every buyer. Also, the products to which the buyer has deep interest can be emphasized in offering in response to the attention to the product of the buyer. Therefore, the optimum product offering data can be offered to each buyer.

The product offering unit offers a plurality pieces of product offering data received from the server to the buyer, and makes the buyer select one or more pieces of product offering data.

According to the above configuration, the desired product offering data can be selected by the buyer from a plurality pieces of the product offering data extracted every buyer type, and the type of the buyer can be fed back to the server system based on this selection result.

According to still another aspect of the present invention, there is provided a method of performing electronic commerce of a product by a computer via a network, comprising the steps of (a) receiving a request for a product from a buyer; (b) transmitting one piece of product offering data or more generated in response to the received request for the product, the product offering data being displayed to the buyer so as to correspond to a product purchase characteristic of the buyer; (c) receiving product transaction data corresponding to the transmitted product offering data; and (d) storing the received product transaction data as transaction actual result data between the buyer and a seller.

According to yet still another aspect of the present invention, there is provided a method of transmitting product transaction in response to product offer from a seller by a computer via a network, comprising the steps of (aa) transmitting a product offering request to a server; (bb) generating product layout data, which indicates a layout or a size of a product offered to a buyer on a display device, according to attention degree data, which indicates a degree of interest of the buyer issuing the product offering request with respect to the product, in product offering data received from the server; and (oc) offering the product in compliance with the generated product layout data.

According to still another aspect of the present invention, there is provided a computer readable recording medium for recording a program which causes a computer to execute electronic commerce processings of products via a network, the processings comprising a process for deriving a buyer type indicating a product purchase characteristic of a buyer according to product actual result data between a buyer for buying a product and a seller; a process for generating more than one piece of product offering data to be offered to the buyer in response to a product request for each buyer according to the derived buyer type, the product offering data being displayed to the buyer so as to correspond to the product purchase characteristic of the buyer; and a process of transmitting the generated product offering data.

According to still another aspect of the present invention, there is provided a computer readable recording medium for recording a program which causes a computer to execute processings of product transaction in response to product offer from a seller via a network, the processings comprising a process for transmitting a product offering request to a server; a process of generating product layout data, which indicates a layout or a size of a product offered to a buyer on a display device, according to attention degree data, which indicates a degree of interest of the buyer issuing the product offering request to the product, in product offering data received from the server; and a process of offering the product in compliance with the generated product layout data.

Other features and advantages of the present invention will become apparent from the following description taken in conjunction with the accompanying drawings.

BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principles of the invention.

FIG.1 is a block diagram showing a functional configuration of an electronic commerce apparatus, an electronic commerce method, and a recording medium for storing electronic commerce programs according to a first embodiment of the present invention;

FIG.2 is a view showing a tag format of XML in the first embodiment of the present invention;

FIG.3 is a table showing an example of information stored in a product information storage unit 17 according to first and second embodiments of the present invention;

FIG.4 is a table showing an example of information stored in a transaction information storage unit 18 according to the first and second embodiments of the present invention;

FIG.5 is a flowchart showing a processing algorithm carried out in a server system 1 according to the first embodiment;

FIG.6 is a flowchart showing a processing algorithm carried out in a price decision unit 15 according to the first embodiment of the present invention;

FIG.7 is a table showing an example of information stored in a buyer information storage unit 19 according to the first embodiment of the present invention;

FIG.8 is a flowchart showing a processing algorithm carried out in a client system 2 according to the first embodiment;

FIG.9 is a block diagram showing a functional configuration of an electronic commerce apparatus, an electronic commerce method, and a recording medium for storing electronic commerce programs according to a second embodiment of the present invention;

FIG.10 is a flowchart showing a processing algorithm carried out in a price decision unit 150 according to the second embodiment of the present invention;

FIG.11 is a table showing an example of information stored in a negotiation information storage unit 210 according to the second embodiment of the present invention;

FIG.12 is a table showing an example of information stored in a marketing information storage unit 200 according to the second embodiment of the present invention; and

FIG.13 is a table showing an example of information stored in a buyer information storage unit 190 according to the second embodiment of the present invention,

DETAILED DESCRIPTION OF THE PREFERRED EMBODIMENTS

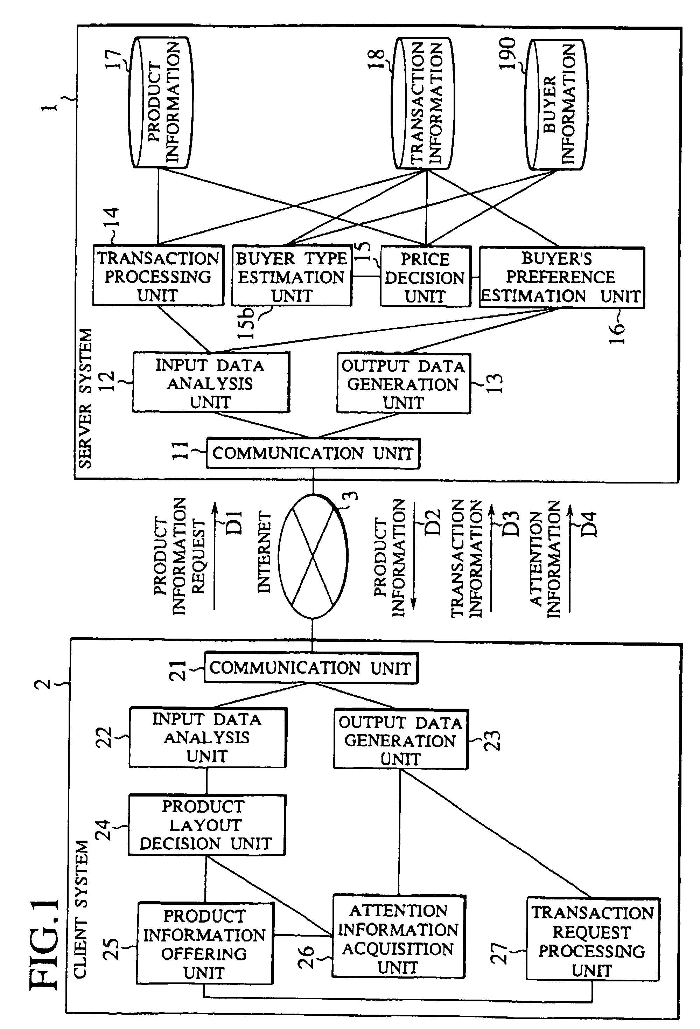

Next, embodiments of an electronic commerce apparatus, an electronic commerce method, and a recording medium for storing electronic commerce programs according to the present invention will be explained in detail with reference to FIG.1 to FIG.11 hereinafter.

First Embodiment

A first embodiment of an electronic commerce apparatus, an electronic commerce method, and a recording medium for storing electronic commerce programs according to the present invention will be explained in detail with reference to FIG.1 to FIG.6 hereinbelow.

The first embodiment provides a function of deciding product offering data such as the price, the lead time, etc. at the time of product sales every buyer by estimating the product purchase characteristic of the buyer.

FIG.1 is a block diagram showing an overall configuration of an electronic commerce apparatus and an electronic commerce system according to the first embodiment of the present invention. As shown in FIG.1, the electronic commerce system according to the first embodiment is roughly classified into a server system 1 provided on the seller side to offer product and a client system 2 provided on the buyer side to buy the product. In this case, the server system 1 in FIG.1 corresponds to an electronic commerce apparatus set forth in claims.

The server system 1 comprises a communication unit 11 for performing communication with computer utilized by the buyer via communication network, an input data analysis unit 12 for analyzing various requests/attention information transmitted from the buyer, an output data generation unit 13 for generating information concerning the products offered to the buyer, a transaction processing unit 14 for performing transaction of the product and the money in compliance with the buyer's purchase request, a buyer type estimation unit 151 for estimating buyer type concerning purchase of product, a price decision unit 15 for deciding offering prices of the products offered from the seller to the buyer, a buyer's preference information estimation unit 16 for estimating the tendency (characteristic) concerning the product purchase of buyer based on the requests/attention information transmitted from the buyer, a product information storage unit 17 for storing and accumulating feature and price information of the products dealt with by the seller, a transaction information storage unit 18 for storing and accumulating the negotiation process between a buyer and a seller during transaction of product, a degree of attention of a buyer for the product, etc., and a buyer information storage unit 19 for storing and accumulating personal information of respective buyers.

Meanwhile, the client system 2 comprises a communication unit 21 for performing the communication with the computer utilized by the seller via communication network, an input data analysis unit 22 for analyzing various requests/attention information transmitted from the seller, an output data generation unit 23 for generating transaction information and attention information transmitted to the seller, a product layout decision unit 24 for deciding a layout of the products in offering product information to the buyer based on data transmitted from the seller, an information offering unit 25 for offering the information of the products to the buyer, a attention information acquisition unit 26 for detecting a degree of buyer's attention for respective products, and a transaction request processing unit 27 for receiving the transaction requests from the buyers, etc. to generate various request data.

In FIG.1, the buyer type estimation unit 151 corresponds to a buyer type estimation unit set forth in claims. The transaction information storage unit 18 corresponds to a transaction data storage unit set forth in claims. The price decision unit 15 and the buyer's preference information estimation unit 16 correspond to a product offering data generation unit set forth in claims.

Also, in FIG.1, the product layout decision unit 24 and the information offering unit 25 correspond to a product layout decision unit set forth in claims and a product information offering unit set forth in claims, respectively.

The server system 1 and the client system 2 are connected to an open network such as the Internet 3, etc.

Then, hardware configurations of respective systems on the network will be explained. The server system 1 and the client system 2 in the electronic commerce apparatus according to the present invention can be installed into either one of various single computer such as so-called general-purpose computer, workstation, PC, network terminal or a system which is constructed by connecting mutually respective computers. The hardware of each computer system employed in the embodiments of the present invention comprises a CPU for processing various processes, a memory device such as program memory, data memory, etc., an external memory device such as FD, CD, etc., an input device such as keyboard, mouse, etc., and an output device such as display device, printer, etc.

A program for implementing various processes of the electronic commerce apparatus of the present invention can be stored in various recording media. The present invention can be carried out by reading such recording medium into the computer having the hardware and then executing the program. The recording medium contains all devices which can record the program, for example, the memory device, the magnetic disk, the optical disk, etc.

The first embodiment of the present invention is constructed as above. Then, a flow of the process in the first embodiment will be explained in sequence hereunder.

The communication unit 11 on the server system 1 side performs data communication between the server system 1 on the seller side and the client system 2 employed by the buyer. In the data communication, TCP/IP protocol which has become a mainstream at present can be employed. As the upper protocol of TCP/IP, HTTP (Hyper Text Transfer Protocol) employed in WWW (World Wide Web) may be employed. The description language such as HTML (Hyper Text Markup Language), XML (Extensive Markup Language), etc. which specifies the display format on the WWW browser may be used on these protocols. In the first embodiment, an example in which XML is employed as the language for the communication between the server and the client will be explained hereunder.

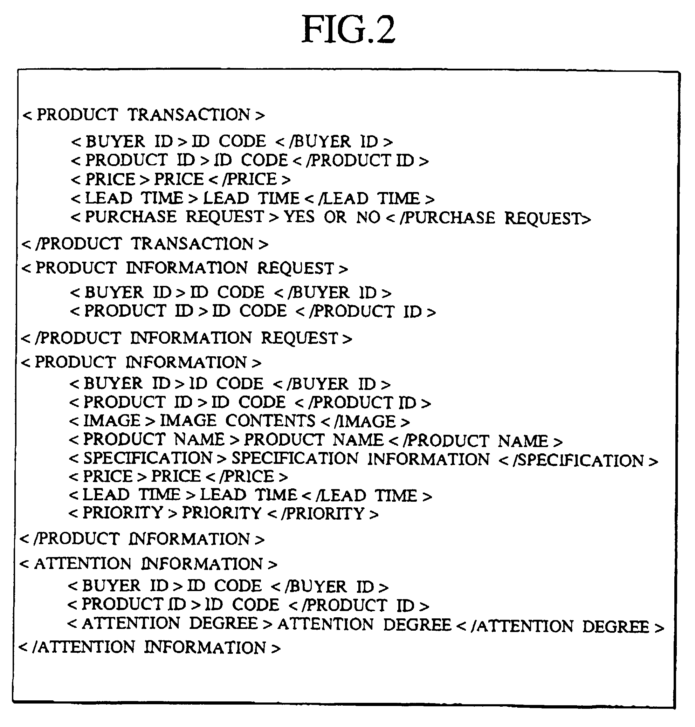

FIG.2 is a view showing a tag format of XML in the first embodiment of the present invention. In the first embodiment, four type information surrounded by tags positioned the left end in FIG.2 are communicated.

The product transaction data as first data corresponds to a portion which is sandwiched between tags of <product transaction> and </product transaction>, and indicates the product transaction request issued from the buyer to the seller. Meanings of this portion of the product transaction tag sandwiched between respective tags will be explained hereunder.

A <buyer ID> indicates an ID code assigned uniquely to buyer. A <product ID> indicates an ID code assigned uniquely to product dealt with by the seller. A <price> is a price offered previously by the seller in product sales, and corresponds to the purchase price of the product for the buyer. A <lead time> indicates the lead time of delivery offered previously by the seller. A <purchase request> indicates whether or not the buyer buys the offered product, and "yes" is checked if the buyer buys the offered product or "no" is checked unless the buyer buys the offered product.

The product information request data as second data corresponds to a portion which is sandwiched between tags of <product information request> and </product information request>, and indicates the product information offering request issued from the buyer to the seller. Meanings of this portion of the product information request tag sandwiched between respective tags will be explained hereunder.

The <buyer ID> indicates an ID code assigned uniquely to buyer, as described above. The <product ID> indicates an ID code assigned uniquely to product dealt with by the seller, as described above. This area sandwiched between the <product ID> tags can be omitted.

The product information data as third data corresponds to a portion which is sandwiched between tags of <product information> and </product information>, and indicates information of the product offered from the seller to the buyer. This <product information> is reply data for the <product information request> issued from the buyer. Meanings of this portion of the product information tag sandwiched between respective tags will be explained hereunder.

The <buyer ID> indicates an ID code assigned uniquely to buyer, as mentioned above. The <product ID> indicates an ID code assigned uniquely to product dealt with by the seller, as mentioned above. A <image> indicates image contents of the product. A <product name> indicates a name of product. A <specification> indicates specification information of product. A <price> indicates a product buying price offered from the seller to the buyer. A <lead time> indicates the lead time of delivery offered from the seller to the buyer. A <priority> is a value indicating to which degree the product should be emphasized in offering the information of the concerned product.

The attention information as fourth data corresponds to a portion which is sandwiched between tags of <attention information> and </attention information>, and indicates a degree of attention which is directed to product by the buyer and transmitted from the buyer side to the seller side. Meanings of this portion of the attention information tag sandwiched between respective tags will be explained hereunder.

The <buyer ID> indicates an ID code assigned uniquely to buyer, as described above. The <product ID> indicates an ID code assigned uniquely to product dealt with by the seller, as described above. A <attention degree> is a value indicating a degree of buyer's attention of concerned product.

In this case, the portions sandwiched between the <buyer ID> tags in above information can be represented by not only the ID code assigned to the particular person but also anonymity ID code (assigned to an anonymity) which is employed such that the person can not be identified. In the case of the anonymity buyer ID, a temporary buyer ID code such as "buyer 001" can be issued as the buyer ID code if it can be identified that certain transaction during prescribed period is performed by the same person. Assume that this temporary buyer ID code should be employed in one communication interaction from start of the communication to end of the communication between buyer and seller.

Then, the process in the input data analysis unit 12 will be explained hereunder. The input data analysis unit 12 interprets the information transmitted from the buyer side via the communication unit 11. Then, the input data analysis unit 12 distributes the data received from the buyer side to either the transaction processing unit 14 or the buyer's preference information estimation unit 16 based on the interpreted input data. In the first embodiment, such distribution is conducted by using the head tag of the information which is expressed by XML and transmitted from the buyer side. Procedures of the distribution will be given as follows.

If the head tag of the received data is the <product transaction> tag, the received data is distributed to the transaction processing unit 14. On the other hand, if the head tag of the received data is the <product information request> tag, the received data is distributed to the buyer's preference information estimation unit 16. If the head tag of the received data is the <attention information> tag, the received data is also distributed to the buyer's preference information estimating portion 16. In this case, although only the head tag information is employed in the first embodiment, the present invention is not always limited to such information and thus the analysis using other tag information may be adopted.

Next, internal processes in the server system 1 will be explained hereinbelow.

(1) Product transaction process

First, the product transaction process will be explained. The transaction processing unit 14 carries out ordering and preparation of product, settlement process with the buyer, etc., based on the product transaction request transmitted from the buyer via the input data analysis unit 12. In this transaction process, the product information storage unit 17 serving as a database of product dealt with by the seller is employed.

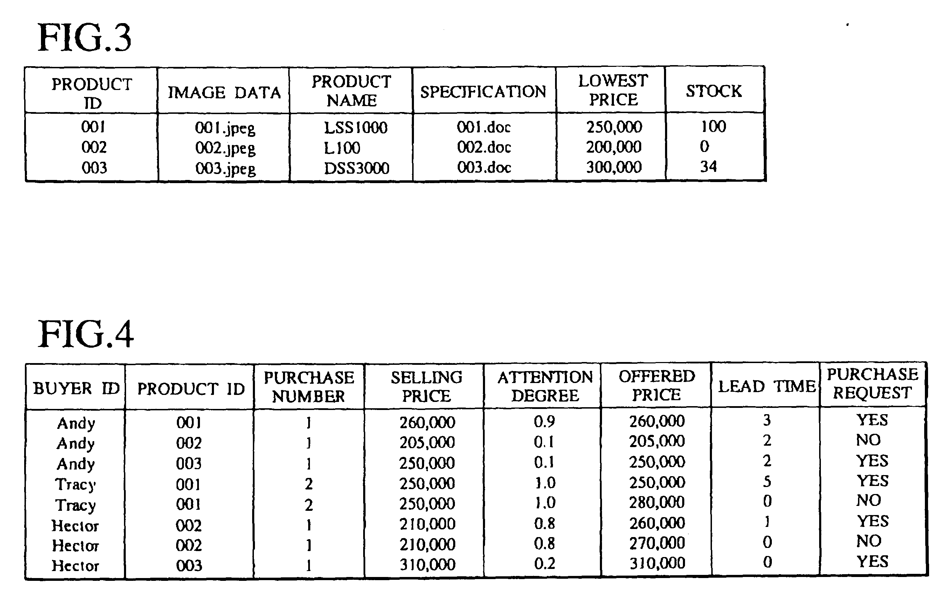

An example of the information stored in the product information storage unit 17 according to the first embodiment is shown in FIG.3. In FIG.3, one row of a table represents one piece of product information. Respective items of product ID, image data, product name, and specification in the table of FIG.3 correspond to respective tag information of <product ID>, <image>, <product name>, and <specification> in the <product information> tag shown in FIG.2. As shown in FIG.3, respective file names may be designated as the image contents and specification information. On the other hand, the lowest price column indicates the lowest sales price for the seller, and the stock column indicates the number of products which are retained by the seller currently.

If the content of the <purchase request> tag in the <product transaction> tag provided from the input data analysis unit 12 is "yes", the transaction processing unit 14 confirms by using the information in the product information storage unit 17 that the content of the <price> tag is more than the lowest price and the stocks are available. After both items have been confirmed, the transaction processing unit 14 carries out the process of product delivery and money settlement for the buyer. At the same time, the transaction processing unit 14 updates information contained in the buyer database of the transaction information storage unit 18.

An example of information stored in the transaction information storage unit 18 is shown in FIG.4. As shown in FIG.4, a combination of information consisting of buyer ID, product ID, purchase number, selling price, attention degree, offered price, lead time, and purchase request is present as a unit, and the database can be constructed as sets of above combination.

If the purchase transaction is done, i.e., if the content of the <purchase request> tag in the <product transaction> tag is "yes", the transaction processing unit 14 substitutes the content of the <price> tag in the <product transaction> tag into the selling price column and the offered price column of the specified product ID corresponding to the buyer ID. At the same time, the transaction processing unit 14 substitutes the content of the <lead time> tag in the <product transaction> tag into the lead time column, adds 1 to the item of the purchase number, and sets "yes" in the column of purchase request.

Unless a set including the concerned buyer ID and the concerned product ID is present in the database of the transaction information storage unit 18, the transaction processing unit 14 adds newly a row containing a set consisting of [concerned buyer ID, concerned product ID, 1, content of the <price> tag, 0, content of the <price> tag, lead time, yes] to the database of the transaction information storage unit 18.

On the other hand, unless the purchase transaction is done, i.e., if the content of the <purchase request> tag is "no", all transaction processings are not carried out. In this case, the transaction processing unit 14 substitutes the content of the <price> tag into the offered price column of the database of the transaction information storage unit 18 corresponding to the specified product ID by the buyer ID, substitutes the content of the <lead time> tag into the lead time column, and sets "no" in the column of purchase request. Here, unless the set including the concerned buyer ID and the concerned product ID is present in the database of the transaction information storage unit 18, the transaction processing unit 14 adds newly a row set consisting of [concerned buyer ID, concerned product ID, 0, content of the <price> tag, 0, content of the <price> tag, lead time, no] to the database of the transaction information storage unit 18.

(2) Sales offered data deciding process

Next, the sales offered data deciding process for each buyer will be explained.

The buyer's preference information estimation unit 16, the price decision unit 15 and the buyer type decision unit 151 perform this sales offered data deciding process.

First, the case where the <attention information> tag is received will be explained. The buyer's preference information estimation unit 16 decides that, if it receives the information sandwiched between the <attention information> tags from the input data analysis unit 12, the buyer has interest in the attention paid product. Then, the buyer's preference information estimation unit 16 updates the database of the transaction information storage unit 18 by using the information of the <attention information> tag. This process is carried out according to following procedures.

i) The case where the concerned set specified in the received tag is present in the transaction information

If the set including buyer ID (assume that the buyer ID contains temporary buyer ID issued to the anonymized user hereinafter) and the specified product ID is present in the transaction information storage unit 18, the buyer's preference information estimation unit 16 updates attention degree information in the transaction information storage unit 18 corresponding to the specified buyer ID and the specified product ID. Assume that the degree of buyer's attention has been saved as a probability value in the attention degree column in the transaction information storage unit 18 in FIG.4. That is, the newly received attention degree information is used for calculation of the probability value, and the degree of attention is updated by following Eq.(1). A method of obtaining the attention degree transmitted from the buyer side will be described later.

$$\text{Attention degree (after update)}= \frac{\text{attention degree (before update)} \times \text{sent attention degree}}{\Sigma_{\text{selling product}} \text{attention degree (before update)} \times \text{sent attention degree}}$$

Eq.(1)

ii) The case where the concerned set specified in the received tag is not present in the transaction information

Unless the set having the specified buyer ID and the specified product ID is not present in the transaction information storage unit 18, the buyer's preference information estimation unit 16 adds a row containing a set consisting of [buyer ID, product ID, 0, 0. attention degree from the input data analysis unit, 0, "unknown"] to the database of the transaction information storage unit 18.

Second, the case where the <product information request> tag is received will be explained. If the buyer's preference information estimation unit 16 receives the information sandwiched between the <product information request> tags from the input data analysis unit 12, it generates the content of the <product information> tag shown in FIG.2 by using data in the product information storage unit 17, and then transmits such content to the output data generation unit 13. If the <product ID> tag exists in the received content of the <product information request> tag, the buyer's preference information estimation unit 16 generates the content of the <product information> tag corresponding to the received <product ID> tag. On the other hand, unless the <product ID> tag exists in the received content of the <product information request> tag, it is assumed that the information request of all products has been issued. In this case, the buyer's preference information estimation unit 16 generates the contents of the <product information> tag whose number is same as products existing in the product information storage unit 17, and then transmits such contents to the output data generation unit 13.

Then, procedures of generating the contents of respective tags constituting the content of the <product information> tag will be explained.

The <buyer ID> is set in the same manner as the content of the <buyer ID> in the <product information request> tag. If the <product ID> is present in the <product information request> tag, the <product ID> is set same as specified product ID in the tag. On the other hand, unless the <product ID> is present, the content of the product ID column in the product information storage unit 17 is substituted into the <product ID> tag. The content of the "image contents" column in the set, whose "product ID" column corresponds to the content of the specified product ID tag, in the product information storage unit 17 is substituted into the <image> tag. The content of the "product name" column in the set, whose "product ID" column corresponds to the content of the specified product ID tag, in the product information storage unit 17 is substituted into the <product name> tag. The content of the "specification" column in the set, whose "product ID" column corresponds to the content of the specified product ID tag, in the product information storage unit 17 is substituted into the <specification> tag.

In addition, the content of the reply to the inquiry which is made to the price decision unit 15, which will be described later, is substituted into the <price> tag. Similarly, the content of the reply to the inquiry which is made to the price decision unit 15 is substituted into the <lead time> tag. Value in the "attenuation degree" column in the set, whose "buyer ID" and "product ID" columns corresponds to the contents of the specified buyer ID tag and the specified product ID tag, in the transaction information storage unit 18 is substituted into the <priority> tag. On the other hand, unless the corresponding set is present, "0" is substituted into the <priority> tag.

Next, the process in the price decision unit 15 and the buyer type estimation unit 151 will be explained. As described above, the price decision unit 15 is activated when it is called appropriately by the buyer's preference information estimation unit 16. The price decision unit 15 decide a set of the offered price and the lead time used when product indicated by the product ID is sold to buyer indicated by the buyer ID which has been transmitted from the buyer's preference information estimation unit 16.

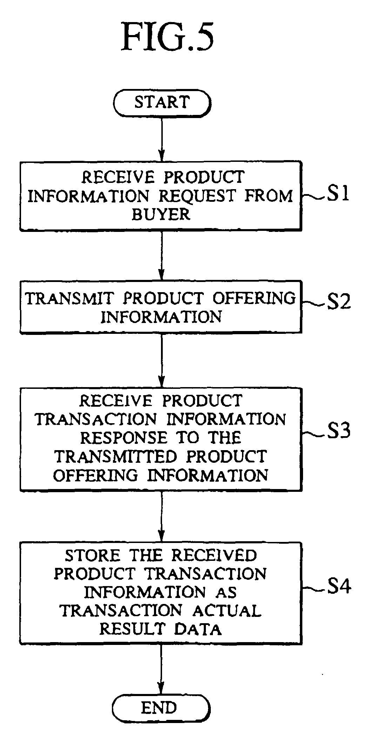

FIG.5 is a flowchart showing procedures carried out in the server system 1. First, product information request (D1 in FIG.1) transmitted from buyer is received (Step S1). The buyer's preference information estimation unit 16 generates product offering data (D2 in FIG.1) in response to the received product information request. and the product offering data is transmitted to the client. After product transaction data (D3 in FIG.1) is received in response to the transmitted product offering data, the received product transaction data is stored in the transaction information storage unit 18 (Step S4).

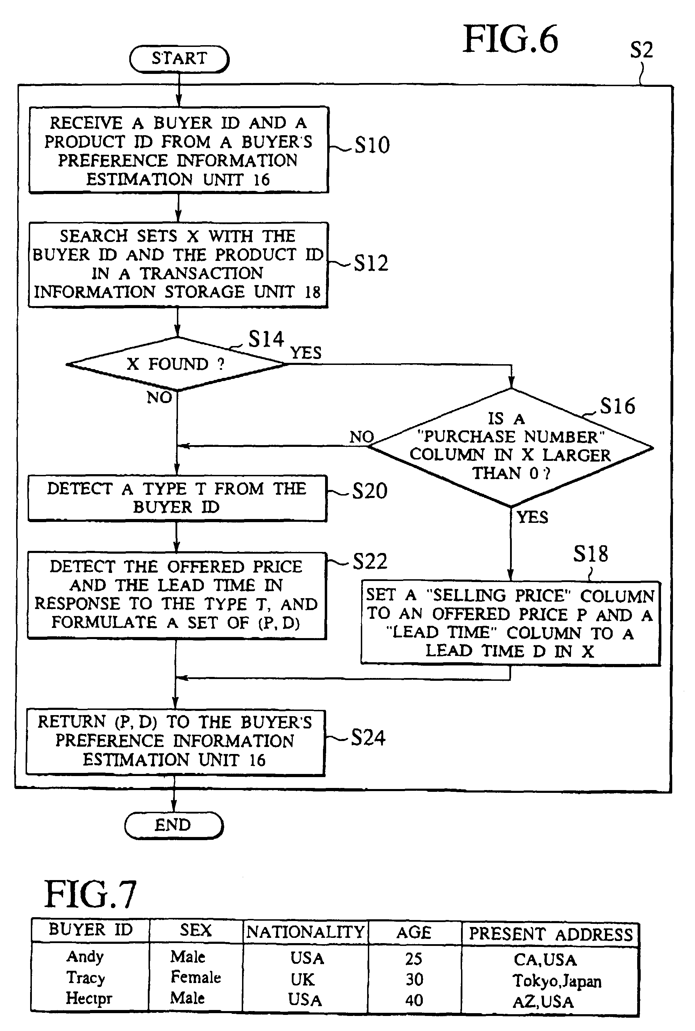

FIG. 6 is a flowchart showing procedures in deciding the price and the lead time carried out by the price decision unit 15 according to the first embodiment. Explanation will be made along the flowchart in FIG.6 hereunder.

In step S10, the price decision unit 15 receives buyer ID and product ID from the buyer's preference information estimation unit 16.

In step S12, the price decision unit 15 searches the database in the transaction information storage unit 18 to find a set (called X) having the specified buyer ID and the specified product ID.

In step S14, the price decision unit 15 checks based on the search result in step S12 whether or not the set X having the same buyer ID and product ID as the input buyer ID and the input product ID has been found. If the set X has been found, the process advances to step S16. Unless the set X has been found, the process goes to step S20.

In step S16, the price decision unit 15 refers value in the "purchase number" column in the set X. If the purchase number is larger than 0, it is assumed that the buyer has the actual purchase actual results in the past and then the process proceeds to step S18. On the contrary, if the purchase number is 0, it is assumed that the buyer has no purchase actual result of the input product and then the process proceeds to step S20.

In step S18, the "selling price" column and the "lead time" column in the set X are set as the offered price P and the delivery date D respectively based on the actual purchase results stored in the transaction information storage unit 18. Then, the process proceeds to step S24.

While, in step S20, the buyer who has the input buyer ID is brought into the situation that he or she has not bought product with the input product ID yet. In the first embodiment, in this situation that the product has not been bought, the product preference information of the input buyer is estimated. More particularly, in step S20, a type T indicating the characteristic (tendency) in product purchase is detected with respect to the buyer ID by the buyer type estimation unit 151. In the first embodiment, the type T is defined based on a utility function which uses the lead time c and the offered price m as arguments.

The "utility function" is a function indicating a degree of satisfaction of buyer in buying product. Accordingly, it is appreciated that buyer is satisfied mostly by product purchase when this utility function is maximized. On the seller side, the classification is carried out by judging which element should be regarded as important when each buyer wants to buy product, by using this utility function.

Assume that the definition of the utility function in the first embodiment can be given by following Eqs.(2-1) and (3-1).

$$u(c, m)=(\ell-m)-d(c,t) \qquad\qquad \text{Eq.(2-1)}$$

$$d(c, t)=e^{ct}-1 \qquad\qquad \text{Eq.(3-1)}$$

Where $\ell$ is a constant indicating the lowest price held by the seller and can be obtained from the product information storage unit 17, and t is a parameter onto which a type of a buyer is reflected. In the first embodiment, assume that the type of a buyer is classified into two stages, i.e., types 1 and 2, and such types 1, 2 have values of t1, t2 respectively (where t1<t2).

Accordingly, the obtained utility function u is reduced smaller as value of the type becomes larger.

The buyer type estimation unit 15b refers lead time, offered price, selling price, and purchase number columns, which correspond to the input buyer ID of the concerned buyer, as the past transaction status (transaction history) of the concerned buyer which is supplied from the transaction information storage unit 18. By referring these columns, it can be decided every time which one of the types 1, 2 the buyer belongs to. Decision procedures in the first embodiment will be explained in the following.

i) First, in the utility function shown in Eq.(2-1), this Eq.(2-1) is transformed into a functional equation (4-1) which calculates an offered price m by using the utility u and the lead time c as the arguments.

$$m (u, c)=\ell-u-d(c, t) \qquad\qquad \text{Eq.(4-1)}$$

ii) A set having the purchase number of more than 1 (therefore, such set has been bought actually in the past), which corresponds to the input buyer ID of the concerned buyer, is searched from the contents in the transaction information storage unit 18.

iii) By using more than one actually measured value of lead time, offered price, and purchase request in the searched sets, it is decided that the tendency of the concerned buyer in buying product can be expressed better in Eq.(2-1) where t=t1 or t=t2. As the standard of this tendency decision, the decision can be made based on which one of t=t1 and t=t2 can agree more precisely with standards given by following Eq.(5-1) and Eq.(6-1) when a calculated value of the offered price m is calculated by substituting the measured value in the searched set in Eq. (4-1) into c while changing u.

$$m(u, c) \leqq \text{measured value of m ("purchase request" column is "no")} \qquad \text{Eq.(5-1)}$$

$$m(u, c) > \text{measured value of m ("purchase request" column is "yes")} \qquad \text{Eq.(6-1)}$$

At the same time, uf which is the most suitable value of u is stored.

iv) The type T having a resultant parameter value t which can agree more precisely with the above standards is set. That is, the type T is decided as a type 1 if the parameter t is close to a value t=t1, while the type T is decided as a type 2 if the parameter t is close to a value t=t2.

In addition, in the above decision scheme, the case will be explained hereunder where the set which has one purchase number or more cannot be found in the sets whose buyer ID corresponds to an input buyer ID of the concerned buyer.

If the product purchase actual result corresponding to the input buyer ID is not present in the transaction information storage unit 18, the first embodiment selects the type which indicates the tendency of the product purchase by using the product purchase actual result of other buyers which are most similar to the concerned buyer. More particularly, with reference to the information in the buyer information storage unit 19, the user's type estimation unit 151 obtains other buyer which is most similar to the concerned buyer and have the number of more than 1 in the "purchase number" column based on buyer IDs in the buyer information storage unit 19.

An example of information stored in the buyer information storage unit 19 is shown FIG.7. Personal information of sex, nationality, age, present address, etc. are stored every buyer ID in the buyer information storage unit 19. The buyer type estimation unit 15b decides a person who is closest to the concerned buyer by using the personal information of the concerned buyer which is grasped by the seller side. In this decision approach, angles θ of vectors between the concerned buyer and selected other buyer stored in the buyer information storage unit 19 are detected by using a space which is constructed by a four-dimensional vector (sex, nationality, age, present address) using the personal information as elements. At this time, the buyer who can give the smallest cos(θ) is decided as the closest person. The type T of the concerned buyer is decided by the approach using the above utility function while using the personal information derived by this approach.

In addition, assume that, if the closest person who has the purchase number of more than 1 cannot be found by using the above approach, the type of the concerned buyer is decided as a default value 2. Then, the process in step S20 finishes.

Then, the process in step S22 will be explained. In step S22, a set (P,D) of offered price P and lead time D for the concerned buyer is decided based on the type information T of the concerned buyer detected in step S20 and the value of derived in step S20. The set (P,D) is extracted at random from sets which can satisfy following Eq.(7-1) and Eq.(8-1).

For T=1,

$$uf=(1-P)-d(D, t_1) \qquad \text{Eq.(7-1)}$$

For T=2,

$$uf=(1-P)-d(D, t_2) \qquad \text{Eq.(8-1)}$$

In step S24, values of (P,D) detected in step S18 or step S22 are returned to the buyer's preference information estimation unit 16. Then, the process in the price decision unit 15 finishes.

Next, the process in the output data generation unit 13 will be explained. The output data generation unit 13 transmits the <product information> tag received from the buyer's preference information estimation unit 16 to the communication unit 11.

The type information of a buyer is set as two stages in the first embodiment, but it may be set arbitrarily. It is possible easily to extend the type information to any stages by setting the type parameter t in Eq.(2-1) every time. Also, the utility function used to decide the type information in the first embodiment is an example, and arbitrary function having any appropriate format may be employed.

Further, the function used to decide the selling price in the first embodiment is an example, and any function having any appropriate format may also be employed.

Also, the price decision unit 15 decides uniquely a set of a price and a lead time for a buyer, but this is not always needed. For example, in step S22, a plurality of sets of a price and a lead time to satisfy Eq.(7-1) and Eq.(8-1) may be extracted and returned to the buyer's preference information estimation unit 16. Although the price is decided separately in step S18 and step S22 during the process of the price decision unit 15, this is not always needed. For example, if step S20 is always carried out by omitting the decision in step S14, the price deciding method may be varied so as to improve the precision of the offered price by deciding the type information even when the concerned buyer has the purchase actual results of the concerned product.

Moreover, the items in the buyer information storage unit 19 are given as an example. It is possible to include any personal information such as favorite color, annual income, occupation, etc. as the item. Although a set of a price and a lead time is given to a buyer and the type information of buyer is estimated based on the set of the price and the delivery date in the first embodiment, this is not always needed. For example, if a set of the price and the purchase number is employed; a similar price deciding and buyer offering scheme can be provided by replacing the function equation to provide the above utility with an equation using the price and the purchase number as the arguments.

Besides, the attention degrees may be adopted as the basis to estimate the type information by grouping such attention degrees according to threshold values.

Next, the process in the client system 2 on the buyer side in the first embodiment will be explained referring to FIG.1 in sequence.

The communication unit 21 on the buyer side carries out data communication between the client system 2 employed by the buyer and the server system 1 on the seller side. In this data communication, like the server system 1, the TCP/IP protocol which has become the mainstream at present can be used. As the upper protocol of TCP/IP, HTTP (Hyper Text Transfer Protocol) employed in WWW (World Wide Web) maybe used. The description language such as HTML (Hyper Text Markup Language). XML (Extensive Markup Language), etc. which specifies the display format of the WWW browser may be used on these protocols. In the first embodiment, like the server system 1, an example in which XML is employed as the language for the communication between the server and the client will be explained hereunder. Also, the format shown in FIG.2 is employed as the tag format of XML.

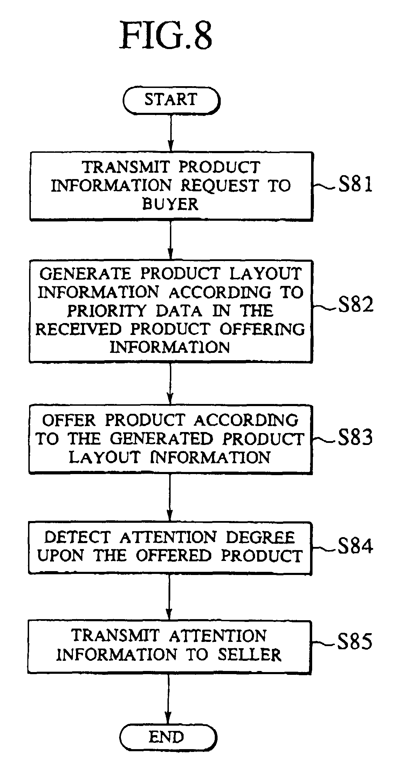

FIG.8 is a flowchart showing procedures carried out in the client system 2. In response to the transmission of a product request information (Step S81), or asyncronously, the communication unit 21 receives product offering information.

The input data analysis unit 22 analyzes the information received from the communication unit 21 on the seller side and then transmits such information to the information offering unit 25 via the product layout decision unit 24.

The product layout decision unit 24 interprets the content of the <product information> tag in the product offering information received from the input data analysis unit 22 and then generates the product information according to the priority data in the received product offering data (Step S82). More specifically, the sentence structure of XML may be described so as to change the product offering and displaying layout on the browser screen in compliance with the priority value in the <priority> in the <product information> tag. Assume that the definition of the sentence structure of XML is given previously. This product layout decision may be carried out on the server system 1 and then product offering information after layout may be transmitted to the client system 2 side.

The products can be arranged to attract the buyer's attention according to this priority. For example, a rate of an occupy area of a product having the high priority on the screen is increased in offering rather than other products having the low priority, and a product having the high priority is displayed at the location near the upper left-hand corner.

The information offering unit 25 offers the product information to the buyer based on the content of the <product information> tag sent from the seller via the input data analysis unit 22 (Step S83). For example, any WWW browser which can interpret XML may be employed in offering the information.

Then, the process in the attention information acquisition unit 26 will be explained. The attention information acquisition unit 26 monitors the behavior of a buyer by employing a camera, a microphone, the movement of a mouse, etc. based on the offered information (product name, etc.) of products obtained from the information offering unit 25 (Step S84). The attention degree of a buyer for respective product names is detected based on this monitored behavior of the buyer. For example, an approach set forth in Japanese Laid-open Patent Application Hei 11-288342 "An interface device for a multimodal input/output system" may be employed to calculate the attention degree. The attention information acquisition unit 26 generates the content of the portion which is sandwiched between the <attention information> tags shown in FIG.2 according to the detected information of the attention degree, and then transmits such content to the output data generation unit 23.

In this case, in many cases this attention degree indicates the latent product purchasing desire which does not come up to the product purchase. Therefore, attention degree data held in the transaction information storage unit 18 in the server system 1 may be used as the basis of type decision performed by the buyer's preference information estimation unit 16.

The transaction request processing unit 27 detects the purchase request from a buyer in the product transaction or the feedback of the product information request. This feedback can be detected by clicking a mouse onto a concerned button or link which is arranged on the WWW browser in the information offering unit 25, etc., for example. The transaction request processing unit 27 generates the content of the portion which is sandwiched between the <product transaction> tags or the <product information request> tags shown in FIG.2 in response to the request from a buyer, and then transmits such content to the output data generation unit 23.

The output data generation unit 23 sends out the tag information, which is supplied from the attention information acquisition unit 26 or the transaction request processing unit 27, to the communication unit 21.

In the first embodiment, a buyer sends the transaction request via an interface such as the WWW browser. However, this is not always needed. The transaction between the buyer and the seller can be performed automatically by implementing the product request processing unit 27 by virtue of the program which is prepared previously by the buyer. In this case, for example, the transaction decision function which employs product offering data (price, lead time, purchase number, specification, etc.) supplied from the seller as the argument is provided to the transaction request processing unit 27 to decide whether or not the transaction is carried out.

According to the first embodiment, following advantages can be achieved.

The buyer type estimation unit 15b decides a type which indicates a product purchase characteristic every buyer, based on the transaction history data between the buyer and the seller in the past. The price decision unit 15 generates the product offering data such as the price, the lead time, the purchase number, etc. buyer by buyer according to the resultant type. As a result, in the electronic commerce, sales negotiation can be achieved in answer to the characteristic of each buyer and thus the sales efficiency can be improved.


Second Embodiment

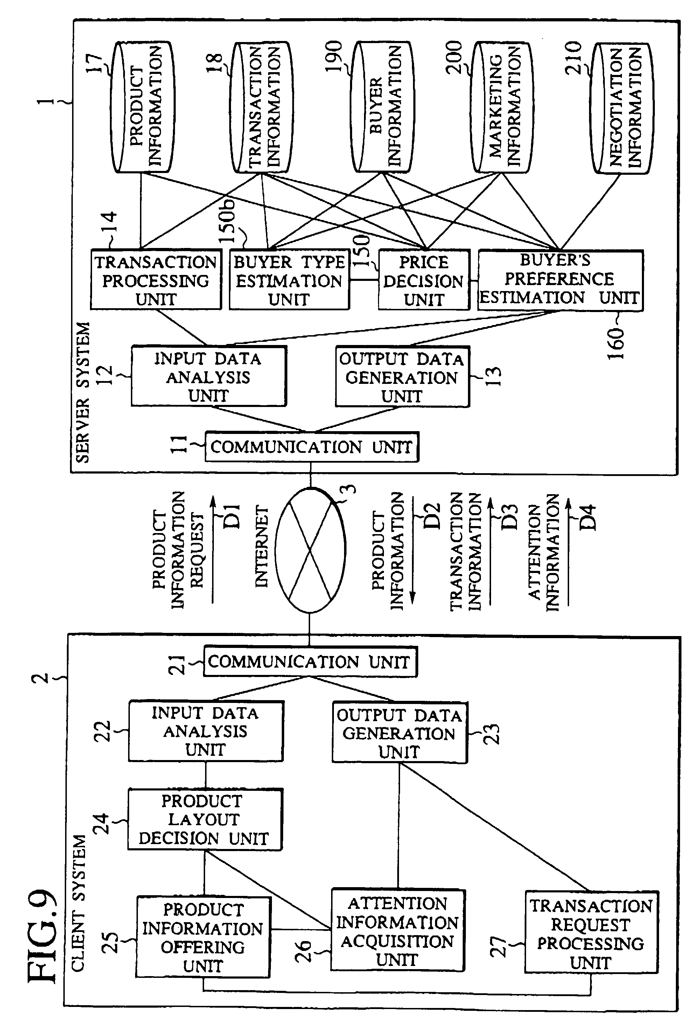

A second embodiment of an electronic commerce apparatus, an electronic commerce method, and a recording medium for storing electronic commerce programs according to the present invention will be explained in detail with reference to FIG. 9 to FIG.13 hereinbelow. Only differences of the second embodiment from the first embodiment will be explained in detail.

Compared with the first embodiment, the second embodiment provides a function for generating the product offering information every above buyer type to a new buyer which has no transaction history in the past and then rendering the buyer to select the desired product offering information from a plurality pieces of product offering information.

FIG.9 is a block diagram showing an overall configuration of an electronic commerce system according to the second embodiment of the present invention. As shown in FIG.9, the electronic commerce system according to the second embodiment is roughly classified into the server system 1 provided on the seller side to offer products and the client system 2 provided on the buyer side to buy a product.

The server system 1 comprises the communication unit 11 for performing the communication with the computer utilized by the buyer via a communication network, the input data analysis unit 12 for analyzing various requests and attention information transmitted from a buyer, the output data generation unit 13 for generating information concerning products offered to a buyer, the transaction processing unit 14 for performing transaction between a product and money in compliance with the buyer's request, a price decision unit 150 for deciding offering price of the products to be offered from the seller to the buyer, a buyer type estimation unit 150b for estimating buyer type concerning purchase of a product, a buyer's preference information estimation unit 160 for estimating the tendency concerning product purchase of a buyer based on the requests and attention information transmitted from the buyer, a product information storage unit 17 for storing and accumulating feature and/or price information of products dealt with by the seller, the transaction information storage unit 18 for storing and accumulating the negotiation process between a buyer and a seller during the transaction of the product, a degree of attention for a product, etc., a buyer information storage unit 190 for storing and accumulating personal information of respective buyers, a marketing information storage unit 200 for storing and accumulating constitutional information of all buyers employed to decide a product price, and a negotiation information storage unit 210 for storing and accumulating the product offering information generated in the course of the negotiation between a buyer and a seller.

Meanwhile, since the configuration of the client system 2 is similar to the first embodiment, its explanation will be omitted hereunder.

Since the network configuration and the hardware configuration in the second embodiment are similar to those in the first embodiment, their explanation will be omitted hereunder.

The second embodiment of the present invention is constructed as above. Then, only different points from the first embodiment in flow of the process will be explained in sequence hereinbelow.

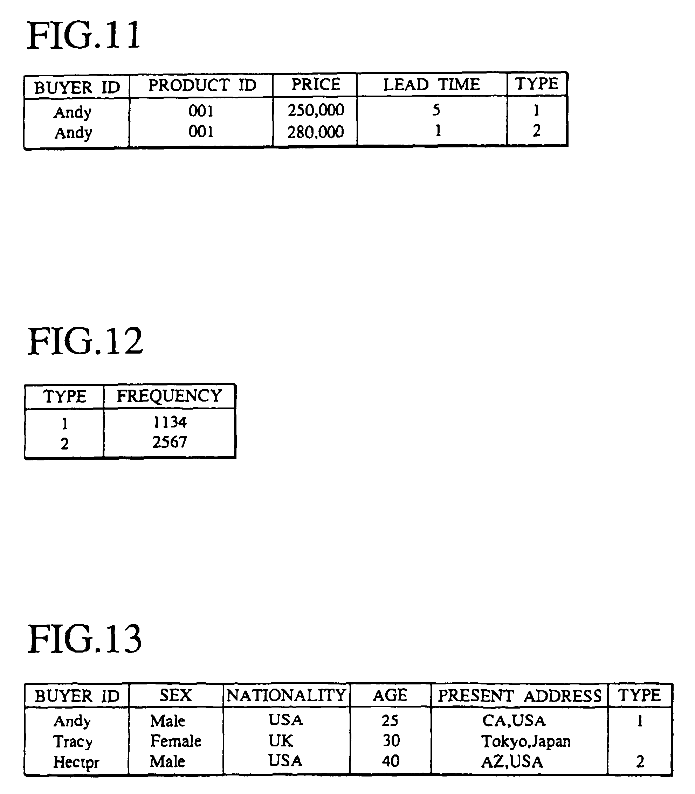

The contents of the product information storage unit 17 and the transaction information storage unit 18 in the second embodiment are similar to respective storage units as shown in FIG.3 and FIG.4 in the first embodiment respectively. While, the content of the buyer information storage unit 190 is constructed to hold the type information every buyer, as shown in FIG.13.

Since an operation of the communication unit 11 is the same as the first embodiment, its explanation will be omitted. Also, since the tag format employed herein is similar to that in the first embodiment shown in FIG.2, its explanation will be omitted.

In addition, since operations of the input data analysis unit 12, the output data generation unit 13, and the transaction processing unit 14 are similar to those in the first embodiment, their explanation will be omitted.

Next, the process in the buyer's preference information estimation unit 160 will be explained hereunder.

First, the case where the <attention information> tag is received will be explained. The buyer's preference information estimation unit 160, when receives the information sandwiched between the <attention information> tags from the input data analysis unit 12, decides that the buyer has interest in the specified product in the tag. Then, the buyer's preference information estimation unit 160 updates a database of the transaction information storage unit 18 by using the information in the <attention information> tag. This process is executed according to following procedures.

(1) The case where the concerned set specified in the received tag is present in the transaction information

If a set including a buyer ID (assume that a buyer ID contains a temporary buyer ID issued to the anonymized user hereinafter) and the specified product ID is present in the transaction information storage unit 18, the buyer's preference information estimation unit 160 updates the attention degree information in the transaction information storage unit 18 corresponding to the concerned buyer ID and the concerned product ID. Assume that the degree of buyer's attention has been saved as a probability value in the attention degree column in the transaction information storage unit 18 in FIG.4. That is, a newly received attention degree information is used for calculation of the probability value, and the degree of attention is updated by following Eq.(9). An approach of obtaining the attention degree transmitted from the buyer side will be described later.

$$\text{Attention degree (after update)} = \frac{\text{attention degree (before update)} \times \text{sent attention degree}}{\Sigma_{\text{selling product}} \text{attention degree (before update)} \times \text{sent attention degree}}$$

Eq.(9)

(2) The case where the concerned set specified in the received tag is not present in the transaction information

Unless the set having the specified buyer ID and the specified product ID is not present in the transaction information storage unit 18, the buyer's preference information estimation unit 160 adds a set consisting of [buyer ID, product ID, 0, 0, attention degree from the input data analysis unit, 0, "unknown"] to the database of the transaction information storage unit 18.

Second, the case where the <product information request> tag is received will be explained. If the buyer's preference information estimation unit 160 receives the information sandwiched between the <product information request> tags from the input data analysis unit 12, it generates a content of the <product information> tag shown in FIG.2 by using data in the product information storage unit 17, and then transmits such content to the output data generation unit 13. If the <product ID> tag exists in the received content of the <product information request> tag, the buyer's preference information estimation unit 160 generates a content of the <product information> tag corresponding to the received <product ID> tag. On the contrary, unless the <product ID> tag exists in the received content of the <product information request> tag, it is assumed that the information request of all products has been issued. In this case, the buyer's preference information estimation unit 160 generates contents of the <product information> tag whose number is same as all products existing in the product information storage unit 17, and then transmits such contents to the output data generation unit 13.

Then, procedures of generating the contents of respective tags constituting a content of the <product information> tag will be explained.

The <buyer ID> is set in the same manner as the content of the <buyer ID> in the <product information request> tag. If the <product ID> is present in the <product information request> tag, the <product ID> is set similarly to such content. On the other hand, unless the <product ID> is present, the content of the product ID column in the product information storage unit 17 is substituted into the <product ID> tag. A content of the "image data" column in the set, whose "product ID" column corresponds to the content of the specified product ID tag, in the product information storage unit 17 is substituted into the <image> tag. A content of the "product name" column in the set, whose "product ID" column corresponds to the content of the specified product ID tag, in the product information storage unit 17 is substituted into the <product name> tag. The content of the "specification" column in the set, whose "product ID" column corresponds to the content of the specified product ID tag, in the product information storage unit 17 is substituted into the <specification> tag.

In addition, a content of a reply to an inquiry which is made to the price decision unit 150, which will be described later, is substituted into the <price> tag. Similarly, a content of a reply to an inquiry which is made to the price decision unit 150 is substituted into the <lead time> column. The value in the "attenuation degree" column in the set, whose "buyer ID" and "product ID" columns corresponds to the contents of the specified buyer ID tag and the specified product ID tag, in the transaction information storage unit 18 is substituted into the <priority> tag. On the contrary, unless the corresponding set is present, "0" is substituted into the <priority> tag.

The buyer's preference information estimation unit 160, when receives a plurality of sets of [type T, the price P, and the lead time D] from the price decision unit 150, generates a plurality of contents of the above <product information> tag. Different sets of [the price P and the lead time D] as a reply contents from the price decision unit 150 are substituted into the price and lead time columns respectively, and then the contents in respective tags are transmitted to the output data generation unit 13. At the same time, the buyer's preference information estimation unit 160 adds data to the negotiation information storage unit 210. The content of the negotiation information storage unit 210 according to the second embodiment is shown in FIG.11. The contents of <buyer ID>, <product ID>, <price>, and <lead time> in the <product information> tag are substituted into the buyer ID, product ID, price, and lead time columns in the negotiation information storage unit 210, respectively, and the type T corresponding to [the price P, the lead time D] returned from the price decision unit 150 is substituted into the type column. Such set of data is generated and added to a table in FIG.11.

The buyer's preference information estimation unit 160, when receives the information sandwiched between the <product information request> tags from the input data analysis unit 12, searches whether or not the information whose buyer ID, product ID, price, and lead time columns coincide with contents of the specified <buyer ID>, <product ID>, <price>, and <lead time> tags in the transmitted <product information> tag are present in the negotiation information storage unit 210 in FIG.11. The buyer's preference information estimation unit 160 decides that, if such sets are present, the type of the specified buyer coincides with the type column in the searched sets and then updates information in the marketing information storage unit 200. The contents of the marketing information storage unit 200 according to the second embodiment is shown in FIG.12. The buyer's preference information estimation unit 160 updates a table in FIG.12 by adding 1 to the frequency column corresponding to the detected type. At the same time, if there exist the sets having the specified buyer ID in the buyer information storage unit 190 in FIG.13, the buyer's preference information estimation unit 160 carries out the process of changing a content of the type column in the set into the detected type. Then, explanation of the process in the buyer's preference information estimation unit 160 is ended.

Next, the process in the price decision unit 150 and the buyer type estimation unit 150b will be explained. As described above, the price decision unit 150 is activated when it is called appropriately by the buyer's preference information estimation unit 160. The price decision unit 150 decides a set of an offered price and a lead time used when a product indicated by the product ID is sold to the buyer indicated by the buyer ID which has been transmitted from the buyer's preference information estimation unit 160.

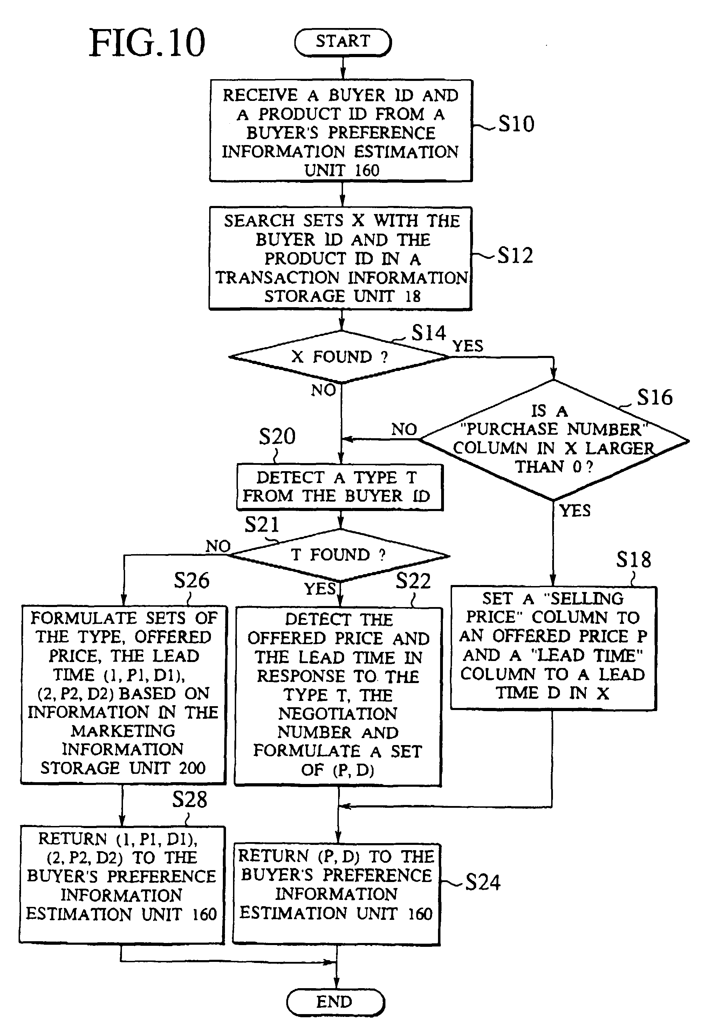

FIG.10 is a flowchart showing procedures in deciding a price and a lead time carried out by the price decision unit 150 and the buyer type estimation unit 150b according to the second embodiment. Explanation will be made with reference to the flowchart in FIG.10 hereunder.

In step S10, the price decision unit 150 receives a buyer ID and a product ID from the buyer's preference information estimation unit 160.

In step S12, the price decision unit 150 searches the database in the transaction information storage unit 18 to find a set (called X) having the specified buyer ID and the specified product ID.

In step S14, the price decision unit 150 checks based on the search result in step S12 whether or not the set X having the same buyer ID and product ID as the input buyer ID and the input product ID has been found. If the set X has been found, the process advances to step S16. Unless the set X has been found, the process goes to step S20.

In step S16, the price decision unit 150 refers the value in the "purchase number" column in the set $\times$. If the purchase number is larger than 0, it is assumed that the buyer has the actual buying results in the past and then the processing proceeds to step S18. On the other hand, if the purchase number is 0, it is assumed that the buyer has no buying result of the concerned input product and then the processing proceeds to step S20.

In step S18, the "selling price" column and the "lead time" column in the set X are set as the offered price P and the lead time D respectively based on the actual buying results stored in the transaction information storage unit 18. Then, the processing proceeds to step S24.

While, in step S20, the buyer who has the input buyer ID is brought into the situation that he or she has not purchased the product with the input product ID yet. In the second embodiment, in this situation that the product has not been bought, the product preference information of the input buyer is estimated. More particularly, in step S20, a type T indicating the tendency (characteristic) in the product purchase is detected based on the buyer ID by the buyer type estimation unit 150b. In the second embodiment, the type T is defined based on a utility function which uses the lead time c and the offered price m as arguments. The definition of the utility function in the second embodiment is given by following Eq.(2-2) and Eq.(3-2). Assume that the definition of the utility function in the second embodiment can be given by following Eqs.(2-2) and (3-2).

$$u(c, m)=(\ell-m)-d(c,t) \qquad\qquad Eq.(2\text{-}2)$$

$$d(c, t)=e^{ct}-1 \qquad\qquad Eq.(3\text{-}2)$$

Where $\ell$ is a constant indicating the lowest price held by the seller and can be obtained from the product information storage unit 17, and t is a parameter onto which a type of a buyer is reflected. In the second embodiment, assume that the type of the buyer is classified into two stages, i.e., type 1 and type 2, and such types 1, 2 have values of t1, t2 respectively (where t1<t2).

Here, in the second embodiment, the user type estimation unit 151 first searches the contents in the buyer information storage unit 190 and decides whether or not the type of the specified buyer is held in the buyer information storage unit 190. If the type column is not a blank column, the content of the type column is set as the type T of the specified buyer. On the contrary, if the type column is the blank column, following processes will be executed.

The buyer type estimation unit 150b refers the lead time, offered price, selling price, and purchase number columns, which correspond to the specified buyer ID of the concerned buyer, as the past transaction status (transaction history) of the concerned buyer which is supplied from the transaction information storage unit 18. By referring to these columns, it can be decided every time which one of the types 1, 2 a buyer belongs to. Decision procedures in the second embodiment will be explained in the following.

i) First, in the utility function shown in Eq.(2-2), this Eq.(2-2) is transformed into a functional equation (4-2) which calculates the offered price m by using the utility u and the lead time c as the arguments.

$$m (u, c)=\ell-u-d(c, t) \qquad\qquad Eq.(4\text{-}2)$$

ii) A set having the purchase number of more than 1 (therefore, such set has been bought actually in the past), which corresponds to the specified buyer ID of the concerned buyer, is searched from the contents in the transaction information storage unit 18.

iii) By using one actually measured value or more of lead time, offered price, and purchase request in the searched sets, it is decided that the tendency of the concerned buyer in buying a product can be expressed better in Eq. (2-2) where t=t1 or t=t2. As the standard of this tendency decision, the decision can be made based on which one of t=t1 and t=t2 can agree more precisely with the standards given by following Eq.(5-2) and Eq.(6-2) when a calculated value of the offered price mis calculated by substituting the measured value in the searched set in Eq. (4-2) into c while changing u.

$$m(u, c) \leqq \text{ measured value of m ("purchase request" column is "no")} \qquad Eq.(5\text{-}2)$$

$$m(u, c)> \text{ measured value of m ("purchase request" column is "yes")} \qquad Eq.(6\text{-}2)$$

At the same time, uf which is the most suitable value of u is stored.

iv) The type T having a resultant parameter value t which can agree more precisely with the above standards is set. That is, the type T is decided as a type 1 if the parameter t is close to a value t=t1, while the type T is decided as a type 2 if the parameter t is close to a value t=t2.

In step S21, it is decided whether or not the type T has been detected in step S20. According to the decision scheme in step S20, the type T cannot be detected if the set whose purchase number is more than 1 cannot be found in the sets whose buyer IDs corresponds to the specified buyer ID of the concerned buyer. Such case occurs if the electronic commerce of the concerned buyer with the concerned seller corresponds to a new transaction. In this case, in the second embodiment, the process goes to step S26. On the other hand, if the type T can be detected in step S20, the process goes to step S22.

Then, the processing in step S22 will be explained. In step S22, a set (P,D) of the offered price P and the lead time D for the specified buyer is decided based on the type information T of the concerned buyer detected in step S20 and also the value uf derived in step S20. The set (P,D) is extracted at random from sets which can satisfy following Eq.(7-2) and Eq.(8-2).

For T=1,

$$uf=(\ell\text{-P})\text{-d}(D, t_1) \qquad \qquad Eq.(7\text{-}2)=Eq.(7\text{-}1)$$

For T=2,

$$uf=(\ell\text{-P})\text{-d}(D, t_2) \qquad \qquad Eq.(8\text{-}2)=Eq.(8\text{-}1)$$

Then, the processing in step S26 will be explained. In step S26, the case will be explained hereunder where the set having the purchase number of more than 1 does not exist in the sets whose buyer ID correspond to the specified buyer ID of the concerned buyer in the type T decision scheme in step S20.

In the second embodiment, unless the product purchase actual results corresponding to the specified buyer ID are contained in the transaction information storage unit 18, the product offering information such as the offered price, the lead time, etc. are generated every buyer type by using the information accumulated in the marketing information storage unit 200. Then, a plurality pieces of the product offering information are offered to the buyer to be selected.

More specifically, in step S26, since it has not been decided which one of the type 1 and the type 2 the buyer belongs to, sets of [the type T, the offered price P, and the lead time D] are obtained every type based on the information obtained from the marketing information storage unit 200. Assume that the offered prices for the types 1, 2 are set to $P_1$, $P_2$ respectively, and the lead time for the types 1, 2 are set to $D_1$, $D_2$ respectively, then, $P_1$, $P_2$, $D_1$, $D_2$ can give solutions of the maximizing problem shown in following Eq.(9) and Eq.(10).

$$D_1 \geqq 0, D_2 \geqq 0,$$

$$(\ell\text{-}P_1)\text{-d}(D_1, t_1) \geqq 0$$

$$(\ell\text{-}P_2)\text{-d}(D_2, t_2) \geqq 0$$

$$(\ell\text{-}P_1)\text{-d}(D_1, t_1) \geqq 0(\ell\text{-}P_2)\text{-d}(D_2, t_1),$$

$$(\ell\text{-}P_2)\text{-d}(D_2, t_2) \geqq 0(\ell\text{-}P_1)\text{-d}(D_1, t_2) \qquad \qquad Eq.(9)$$

Under the above conditions, maximize

$$\frac{P_1}{P_1+P_2}\cdot P_1+\frac{P_2}{P_1+P_2}\cdot P_2 \qquad \qquad Eq.(10)$$

Where $P_1$, $P_2$ are respective frequencies of the type 1 and the type 2 in the marketing information storage unit 200.

The solutions of the above problem can be easily obtained by using the Lagrangean undetermined definition method, etc., for example. Accordingly, the profit of the seller can be maximized under the given conditions.

In step S28, two sets of (1, $P_1$, $D_1$), (2, $P_2$, $D_2$) are formulated by using the values of $D_1$, $D_2$, $P_1$, $P_2$ detected in step S26 and then returned to the buyer's preference information estimation unit 160 as the choices for a buyer. On the client system 2 side which has received a plurality pieces of product offering information as the choices, the information offering unit 25 offers a plurality pieces of product offering information of the desired product to make the buyer select data from them. The type corresponding to the selected product offering information is transmitted to the server system 1 and then stored in the buyer information storage unit 190. In the succeeding transaction, it is possible to transmit the optimum offered data of the product to the buyer by using the stored buyer type. With the above, the explanation of the process in the price decision unit 150 is ended.

In step S24, values of (P,D) detected in step S18 or step S22 are returned to the buyer's preference information estimation unit 160. Then, the processing in the price decision unit 150 is completed.

Next, same as the first embodiment, the output data generation unit 13 sends out the <product information> tag received from the buyer's preference information estimation unit 160 to the communication unit 11.

Note that the type information of a buyer is set as two stages in the second embodiment, but this is an example. It is possible easily to extend the type information to any stages by setting the type parameter t in Eq.(2-2) every time. Also, the utility function used to decide the type information in the second embodiment is a mere example, and any function having any appropriate format may be employed.

Further, the function used to decide the selling price in the second embodiment is a mere example, and any function having any appropriate format may also be employed.

Also, the price decision unit 150 decides a set of the price and the lead time every type one by one in step S26 in FIG.10, but this is not always needed. Normally, there is a possibility that a plurality of such sets are present. In this case, it is possible to provide the choices much more to buyers by generating a plurality of sets of (the type T, the price P, and the lead time D) and then returning them to the buyer's preference information estimation unit 160.

Also, the price is decided separately in step S18, step S22, and step S26 during the processings of the price decision unit 150 shown in FIG.10, but this is not always needed. For example, the price deciding method may be unified by omitting appropriately the decision in step S14 and step S21, or combinations may be changed.

Moreover, the items in the buyer information storage unit 190 are given as an example. It is possible to include any personal information such as favorite color, annual income, occupation, etc. as the item. Although a set of the price and the lead time is given to a buyer and the type information of the buyer is estimated based on the set of the price and the lead time in the second embodiment, this is not always needed. For example, if a set of the price and the purchase number is employed, a similar price deciding and buyer offering scheme can be provided by replacing the function equation to provide the above utility with an equation using the price and the purchase number as the arguments.

In this manner, in the present invention, various variations can be achieved without departing the scope of the present invention.

According to the second embodiment, following advantages can be achieved.

The price decision unit 150, the buyer type estimation unit 150b and the buyer's preference information estimation unit 160 provide a function, which can generate the product offering information every above buyer type and make a buyer select the desired product offering information from a plurality pieces of offered data, to a new buyers which have no transaction history in the past. Therefore, the sales efficiency can be improved by providing the appropriate sales offer of a product to the new buyer.

In summary, according to the present invention, following advantages can be achieved. That is, the present invention provides functions of estimating the product purchase characteristic by the concerned buyer based on the information provided by the buyer, and deciding the product offering information such as product price, lead time, purchase number, product arrangement, etc. every buyer based on this product purchase characteristic.

Accordingly, it is possible to set the optimum product price and product layout buyer by buyer.

In this manner, according to the present invention, the product offer of high sales efficiency can be easily achieved in the electronic commerce and in turn the profit can be produced in the electronic commerce.

It is to be noted that, besides those already mentioned above, many modifications and variations of the above embodiments may be made without departing from the novel and advantageous features of the present invention. Accordingly, all such modifications and variations are intended to be included within the scope of the appended claims.

**Claims**

1. An apparatus for performing electronic commerce of a product by a computer via a network, comprising:

a buyer type estimation unit (15b) for deriving a buyer type indicating a product purchase characteristic of the buyer according to transaction actual result data between the buyer for buying a product and a seller; a product offering data generation unit (15,16) for generating at least one piece of product offering data to be offered to the buyer in response to a product request for each buyer according to the derived buyer type, the product offering data being displayed to the buyer so as to correspond to the product purchase characteristic of the buyer; and a transmission unit (13,11) for transmitting the generated product offering data.

2. The apparatus of claim 1, wherein the product offering data generation unit (15,16) calculates at least any one or more of a price, a lead time, and a purchase number of a requested product according to the buyer type and sets it in the product offering data.

3. The apparatus of claim 1, further comprising:

   a storage unit (18) for storing the transaction actual result data; and
   wherein the transaction actual result data is generated every combination of a buyer identifier for identifying uniquely each buyer and a product identifier for identifying uniquely each product to include any one or more of offering price data offered from the buyer, selling price data to be offered to the buyer, lead time of the product, and attention degree data indicating a degree of buyer's interest to the product.

4. The apparatus of claim 1, wherein the buyer type estimation unit (15b) derives the buyer type if it decides according to the transaction actual result data that the buyer requesting the product offer has not bought the product previously.

5. The apparatus of claim 4, wherein the buyer type estimation unit (15b) derives the buyer type according to the transaction actual result data corresponding to other product identifier for which the buyer has transaction actual result other than a given product identifier.

6. The apparatus of claim 5, wherein the buyer type estimation unit (15b) derives the buyer type according to the transaction actual result data corresponding to other buyer who has personal information similar to the buyer.

7. The apparatus of claim 1, wherein the buyer type estimation unit (15b) derives the buyer type by applying a utility function which indicates a degree of satisfaction of product purchase of the buyer to the transaction actual result data.

8. The apparatus of claim 1, wherein the buyer type estimation unit (15b) derives the buyer type according to a count of the buyer type concerning all buyers in the transaction actual result data if the buyer has no transaction actual result with the seller.

9. The apparatus of claim 3, wherein the product offering data generation unit (15,16) sets product layout data, which indicates a layout or a size of a product offered to the buyer on a display device, in the product offering data according to the attention degree data in the transaction actual result data.

10. The apparatus of claim 1, wherein the buyer type estimation unit (15b) derives a plurality of buyer types.

11. An apparatus for transmitting product transaction in response to product offer from a seller by a computer via a network, comprising:

    a transmission unit (23,21) for transmitting a product offering request to a server;
    a product layout decision unit (24) for generating product layout data, which indicates a layout or a size of a product offered to a buyer on a display device, according to attention degree data, which indicates a degree of interest of the buyer issuing the product offering request with respect to the product, in product offering data received from the server; and
    a product offering unit (25) for offering the product in compliance with the generated product layout data.

12. The apparatus of claim 11, further comprising:
    a detecting unit (26) for detecting a degree of attention of the buyer upon the offered product.

13. The apparatus of claim 11, wherein the product offering unit (25) offers a plurality pieces of product offering data received from the server to the buyer, and makes the buyer select one or more pieces of product offering data.

14. A method of performing electronic commerce of a product by a computer via a network, comprising the steps of:

    (a) receiving a request for a product from a buyer (S1);
    (b) transmitting one piece of product offering data or more generated in response to the received request for the product, the product offering data being displayed to the buyer so as to correspond to a product purchase characteristic of the buyer (S2);

(c) receiving product transaction data corresponding to the transmitted product offering data (S3); and

(d) storing the received product transaction data as transaction actual result data between the buyer and a seller (S4).

**15.** The method of claim 14, further comprising the steps of:

(e) deriving a buyer type indicating a product purchase characteristic of the buyer according to the transaction actual result data (S20); and

(f) generating the product offering data for each buyer according to the buyer type (S24);

wherein the step (b) transmits the product offering data generated in the step (f).

**16.** The method of claim 14, wherein, in step (f), at least one or more pieces of product price data, lead time data, purchase number data, which are requested, and attention degree data indicating a degree of interest of the buyer upon the product is calculated according to the buyer type, and then set in the product offering data.

**17.** A method of transmitting product transaction in response to product offer from a seller by a computer via a network, comprising the steps of:

(aa) transmitting a product offering request to a server (S81);

(bb) generating product layout data, which indicates a layout or a size of a product offered to abuyer on a display device, according to attention degree data, which indicates a degree of interest of the buyer issuing the product offering request with respect to the product, in product offering data received from the server (S82); and

(cc) offering the product in compliance with the generated product layout data (S83).

**18.** The method of claim 17, further comprising the steps of:

(dd) detecting a degree of attention of the buyer upon the product offered in the step (cc) (S84); and

(ee) transmitting the detected degree of attention to the server as attention degree data (S85).

**19.** A computer readable recording medium for recording a program that causes a computer to execute electronic commerce processing of products via a network, the processing comprising:

a process (15b) for deriving a buyer type indicating a product purchase characteristic of a buyer according to product actual result data between a buyer for buying a product and a seller;

a process (S15,16) for generating more than one piece of product offering data to be offered to the buyer in response to a product request for each buyer according to the derived buyer type, the product offering data being displayed to the buyer so as to correspond to the product purchase characteristic of the buyer; and

a process (11,13) of transmitting the generated product offering data.

**20.** A computer readable recording medium for recording a program that causes a computer to execute processing of product transaction in response to product offer from a seller via a network, the processing comprising:

a process (23,21) for transmitting a product offering request to a server;

a process (24) of generating product layout data, which indicates a layout or a size of a product offered to a buyer on a display device, according to attention degree data, which indicates a degree of interest of the buyer issuing the product offering request to the product, in product offering data received from the server; and

a process (25) of offering the product in compliance with the generated product layout data.

# FIG.1

CLIENT SYSTEM 2

- PRODUCT INFORMATION OFFERING UNIT 25
- PRODUCT LAYOUT DECISION UNIT 24
- INPUT DATA ANALYSIS UNIT 22
- COMMUNICATION UNIT 21
- ATTENTION INFORMATION ACQUISITION UNIT 26
- OUTPUT DATA GENERATION UNIT 23
- TRANSACTION REQUEST PROCESSING UNIT 27

INTERNET 3

- PRODUCT INFORMATION REQUEST D1
- PRODUCT INFORMATION D2
- TRANSACTION INFORMATION D3
- ATTENTION INFORMATION D4

SERVER SYSTEM 1

- COMMUNICATION UNIT 11
- INPUT DATA ANALYSIS UNIT 12
- OUTPUT DATA GENERATION UNIT 13
- TRANSACTION PROCESSING UNIT 14
- BUYER TYPE ESTIMATION UNIT 15b
- PRICE DECISION UNIT 15
- BUYER'S PREFERENCE ESTIMATION UNIT 16
- PRODUCT INFORMATION 17
- TRANSACTION INFORMATION 18
- BUYER INFORMATION 190

EP 1 031 935 A2

# FIG.2

```
< PRODUCT TRANSACTION >

    < BUYER ID > ID CODE < /BUYER ID >
    < PRODUCT ID > ID CODE < /PRODUCT ID >
    < PRICE > PRICE < /PRICE >
    < LEAD TIME > LEAD TIME < /LEAD TIME >
    < PURCHASE REQUEST > YES OR NO < /PURCHASE REQUEST>

< /PRODUCT TRANSACTION >
< PRODUCT INFORMATION REQUEST >

    < BUYER ID > ID CODE < /BUYER ID >
    < PRODUCT ID > ID CODE < /PRODUCT ID >

< /PRODUCT INFORMATION REQUEST >
< PRODUCT INFORMATION >

    < BUYER ID > ID CODE < /BUYER ID >
    < PRODUCT ID > ID CODE < /PRODUCT ID >
    < IMAGE > IMAGE CONTENTS < /IMAGE >
    < PRODUCT NAME > PRODUCT NAME < /PRODUCT NAME >
    < SPECIFICATION > SPECIFICATION INFORMATION < /SPECIFICATION >
    < PRICE > PRICE < /PRICE >
    < LEAD TIME > LEAD TIME < /LEAD TIME >
    < PRIORITY > PRIORITY < /PRIORITY >

< /PRODUCT INFORMATION >
< ATTENTION INFORMATION >

    < BUYER ID > ID CODE < /BUYER ID >
    < PRODUCT ID > ID CODE < /PRODUCT ID >
    < ATTENTION DEGREE > ATTENTION DEGREE < /ATTENTION DEGREE >
< /ATTENTION INFORMATION >
```

# FIG.3

| PRODUCT ID | IMAGE DATA | PRODUCT NAME | SPECIFICATION | LOWEST PRICE | STOCK |
|---|---|---|---|---|---|
| 001 | 001.jpeg | LSS1000 | 001.doc | 250,000 | 100 |
| 002 | 002.jpeg | L100 | 002.doc | 200,000 | 0 |
| 003 | 003.jpeg | DSS3000 | 003.doc | 300,000 | 34 |

# FIG.4

| BUYER ID | PRODUCT ID | PURCHASE NUMBER | SELLING PRICE | ATTENTION DEGREE | OFFERED PRICE | LEAD TIME | PURCHASE REQUEST |
|---|---|---|---|---|---|---|---|
| Andy | 001 | 1 | 260,000 | 0.9 | 260,000 | 3 | YES |
| Andy | 002 | 1 | 205,000 | 0.1 | 205,000 | 2 | NO |
| Andy | 003 | 1 | 250,000 | 0.1 | 250,000 | 2 | YES |
| Tracy | 001 | 2 | 250,000 | 1.0 | 250,000 | 5 | YES |
| Tracy | 001 | 2 | 250,000 | 1.0 | 280,000 | 0 | NO |
| Hector | 002 | 1 | 210,000 | 0.8 | 260,000 | 1 | YES |
| Hector | 002 | 1 | 210,000 | 0.8 | 270,000 | 0 | NO |
| Hector | 003 | 1 | 310,000 | 0.2 | 310,000 | 0 | YES |

EP 1 031 935 A2

# FIG.5

```
┌─────────────┐
│    START    │
└─────────────┘
       │
       ▼
┌──────────────────────┐
│   RECEIVE PRODUCT    │
│ INFORMATION REQUEST  ├── S1
│     FROM BUYER       │
└──────────────────────┘
       │
       ▼
┌──────────────────────┐
│ TRANSMIT PRODUCT     │
│ OFFERING             ├── S2
│ INFORMATION          │
└──────────────────────┘
       │
       ▼
┌──────────────────────┐
│   RECEIVE PRODUCT    │
│ TRANSACTION          │
│ INFORMATION          ├── S3
│ RESPONSE TO THE      │
│ TRANSMITTED PRODUCT  │
│ OFFERING INFORMATION │
└──────────────────────┘
       │
       ▼
┌──────────────────────┐
│ STORE THE RECEIVED   │
│ PRODUCT TRANSACTION  │
│ INFORMATION AS       ├── S4
│ TRANSACTION ACTUAL   │
│ RESULT DATA          │
└──────────────────────┘
       │
       ▼
┌─────────────┐
│     END     │
└─────────────┘
```

# FIG.6

S2

```
        ┌─────────┐
        │  START  │
        └────┬────┘
             │
   ┌─────────▼──────────┐
   │  RECEIVE A BUYER ID AND A   │
   │  PRODUCT ID FROM A BUYER'S  │ ～S10
   │  PREFERENCE INFORMATION     │
   │  ESTIMATION UNIT 16         │
   └─────────┬──────────┘
             │
   ┌─────────▼──────────┐
   │  SEARCH SETS X WITH THE     │
   │  BUYER ID AND THE PRODUCT ID│ ～S12
   │  IN A TRANSACTION           │
   │  INFORMATION STORAGE UNIT 18│
   └─────────┬──────────┘
             │
          S14│  YES
        ◇ X FOUND ? ◇──────────────┐
             │ NO                   │
```

SEARCH SETS X WITH THE BUYER ID AND THE PRODUCT ID IN A TRANSACTION INFORMATION STORAGE UNIT 18 — S12

X FOUND ? — S14   YES

IS A "PURCHASE NUMBER" COLUMN IN X LARGER THAN 0 ? — S16   NO / YES

DETECT A TYPE T FROM THE BUYER ID — S20

DETECT THE OFFERED PRICE AND THE LEAD TIME IN RESPONSE TO THE TYPE T, AND FORMULATE A SET OF (P, D) — S22

SET A "SELLING PRICE" COLUMN TO AN OFFERED PRICE P AND A "LEAD TIME" COLUMN TO A LEAD TIME D IN X — S18

RETURN (P, D) TO THE BUYER'S PREFERENCE INFORMATION ESTIMATION UNIT 16 — S24

END

# FIG.7

| BUYER ID | SEX | NATIONALITY | AGE | PRESENT ADDRESS |
|----------|--------|-------------|-----|-----------------|
| Andy | Male | USA | 25 | CA,USA |
| Tracy | Female | UK | 30 | Tokyo,Japan |
| Hectpr | Male | USA | 40 | AZ,USA |

# FIG.8

START

TRANSMIT PRODUCT INFORMATION REQUEST TO BUYER ~S81

GENERATE PRODUCT LAYOUT INFORMATION ACCORDING TO PRIORITY DATA IN THE RECEIVED PRODUCT OFFERING INFORMATION ~S82

OFFER PRODUCT ACCORDING TO THE GENERATED PRODUCT LAYOUT INFORMATION ~S83

DETECT ATTENTION DEGREE UPON THE OFFERED PRODUCT ~S84

TRANSMIT ATTENTION INFORMATION TO SELLER ~S85

END

# FIG.9

**CLIENT SYSTEM** 2

- 25 PRODUCT INFORMATION OFFERING UNIT
- 24 PRODUCT LAYOUT DECISION UNIT
- 22 INPUT DATA ANALYSIS UNIT
- 21 COMMUNICATION UNIT
- 26 ATTENTION INFORMATION ACQUISITION UNIT
- 23 OUTPUT DATA GENERATION UNIT
- 27 TRANSACTION REQUEST PROCESSING UNIT

PRODUCT INFORMATION REQUEST D1

INTERNET

PRODUCT INFORMATION D2

TRANSACTION INFORMATION D3

ATTENTION INFORMATION D4

3

**SERVER SYSTEM** 1

- 11 COMMUNICATION UNIT
- 12 INPUT DATA ANALYSIS UNIT
- 13 OUTPUT DATA GENERATION UNIT
- 14 TRANSACTION PROCESSING UNIT
- 150b BUYER TYPE ESTIMATION UNIT
- 150 PRICE DECISION UNIT
- 160 BUYER'S PREFERENCE ESTIMATION UNIT

- 17 PRODUCT INFORMATION
- 18 TRANSACTION INFORMATION
- 190 BUYER INFORMATION
- 200 MARKETING INFORMATION
- 210 NEGOTIATION INFORMATION

EP 1 031 935 A2

EP 1 031 935 A2

# FIG.10

START

RECEIVE A BUYER ID AND A PRODUCT ID FROM A BUYER'S PREFERENCE INFORMATION ESTIMATION UNIT 160 — S10

SEARCH SETS X WITH THE BUYER ID AND THE PRODUCT ID IN A TRANSACTION INFORMATION STORAGE UNIT 18 — S12

S14 — X FOUND ? — YES / NO

S16 — IS A "PURCHASE NUMBER" COLUMN IN X LARGER THAN 0 ? — NO / YES

S20 — DETECT A TYPE T FROM THE BUYER ID

S21 — T FOUND ? — NO / YES — S22

S26 — FORMULATE SETS OF THE TYPE, OFFERED PRICE, THE LEAD TIME $(1, P1, D1)$, $(2, P2, D2)$ BASED ON INFORMATION IN THE MARKETING INFORMATION STORAGE UNIT 200

S22 — DETECT THE OFFERED PRICE AND THE LEAD TIME IN RESPONSE TO THE TYPE T, THE NEGOTIATION NUMBER AND FORMULATE A SET OF $(P, D)$

S18 — SET A "SELLING PRICE" COLUMN TO AN OFFERED PRICE P AND A "LEAD TIME" COLUMN TO A LEAD TIME D IN X

S28 — RETURN $(1, P1, D1)$, $(2, P2, D2)$ TO THE BUYER'S PREFERENCE INFORMATION ESTIMATION UNIT 160

RETURN $(P, D)$ TO THE BUYER'S PREFERENCE INFORMATION ESTIMATION UNIT 160 — S24

END

# FIG.11

| BUYER ID | PRODUCT ID | PRICE | LEAD TIME | TYPE |
|----------|-----------|--------|-----------|------|
| Andy | 001 | 250,000 | 5 | 1 |
| Andy | 001 | 280,000 | 1 | 2 |

# FIG.12

| TYPE | FREQUENCY |
|------|-----------|
| 1 | 1134 |
| 2 | 2567 |

# FIG.13

| BUYER ID | SEX | NATIONALITY | AGE | PRESENT ADDRESS | TYPE |
|----------|-----|-------------|-----|-----------------|------|
| Andy | Male | USA | 25 | CA,USA | 1 |
| Tracy | Female | UK | 30 | Tokyo,Japan | |
| Hectpr | Male | USA | 40 | AZ,USA | 2 |